# EUROPEAN PATENT APPLICATION

(11) **EP 2 060 477 A1**
(43) Date of publication of application: **20.05.2009**
(21) Application number: 07120746.8
(22) Date of filing: 15.11.2007
(51) Int. Cl.: B62J 7/04, B62K 13/06

(54) **An assemblable pedal-powered quadricycle**

(71) Applicant: Lucantoni, Alberto, 06034 Foligno (PG) (IT)
(72) Inventor: Lucantoni, Alberto, 06034 Foligno (PG) (IT)
(74) Representative: Dall'Olio, Giancarlo

(57) **Abstract**

An assemblable pedal-powered quadricycle, comprising: a first bicycle (1); a second bicycle (2); a first member (81) fixed to the first bicycle (1); a second member (82) fixed to the second bicycle (2); means (57, 58, 59) for rigidly removably connecting the first bicycle (1) and the second bicycle (2) to one another; a removable third connecting member (32) hinged to the first member (81) and to the second member (82). The steering system of the quadricycle (100) comprises: a first assembly including a fork (184) of the first bicycle (19) and the first member (81); a second assembly including a fork (185) of the second bicycle (2) and the second member (82); the means for connecting (57, 58, 59); the third member (32); and at least a steering column (86, 87) selected from between the steering column (86) of the first bicycle (1) and the steering column (87) of the second bicycle (2).

## Description

The invention relates to the technical sector concerning pedal-powered quadricycles, powered by muscular traction.

Pedal quadricycles powered by muscle traction are widely known, and have a steering system which from a functional point of view is assimilable to, for example, a motor vehicle's. The steering system of various types of pedal quadricycles comprises an articulated quadrilateral (two arms, two bars) of the Jeantaud or Panhard types, in agreement with the known Ackermann principle. In other words, in a straight forward movement, the straight line joining a first pair of hinge points associated to a first hinged arm, and the straight line joining the remaining pair of hinge points associated to the other hinged arm, intersect each other at a point on the rear axle of the quadricycle, i.e. on the common rotation axis of the back wheels.

The aim of the present invention is to provide a new-concept pedal-powered quadricycle which can be composed of two bicycles, an assembly and de-assembly of which (in order to return to having two distinct bicycles) is rapid and easy.

A further aim of the present invention consists in providing an assemblable pedal quadricycle which is easy to steer, enables precise direction changes, and the costs of which are relatively contained with respect to the advantages sought.

An additional aim of the present invention is to provide a quadricycle which enables easy transport of objects and/or of persons.

The above-cited aims are obtained in agreement with the content of the claims.

The characteristics of the invention will be explained in the following description, which describes a preferred though non-exclusive embodiment of the invention, with reference to the accompanying figures of the drawings, in which:
figures 1A, 1B, 1C and 1D are four schematic views of the assemblable quadricycle, shown respectively in lateral, plan, rear and frontal views;
figures 2A, 2B schematically illustrate two views, respectively lateral and in plan view, of one of the two bicycles making up the quadricycle of the invention, in a configuration in which the bicycle is uncoupled from the remaining bicycle for normal use of the bicycle;
figures 3A, 3B schematically represent two views, respectively a plan and lateral view, of structural components for making up the quadricycle of the invention;
figures 4, 4A schematically illustrate two views, respectively lateral and plan view, of a significant component of the quadricycle of the invention;
figure 4B is a view along section IV-IV of figure 4A;
figure 4C is an enlarged view of detail 1 of figure 4B;
figure 5 is a schematic illustration in plan view of the steering system of the quadricycle of the present invention;
figure 6 is a schematic illustration in plan view of a steering system of the quadricycle of the present invention, in a variant thereof;
figure 7 is an exploded perspective view of the front part of one of the bicycles destined to make up the quadricycle of the present invention.

The quadricycle of the invention can be obtained starting from assembly of two substantially conventional-type bicycles, with the addition of additional components of: structural type for rigidly and removably connecting the frames of the bicycles to one another in order to define a single frame; and functional type for implementing the steering system, such that the steering system comprises an articulated quadrilateral of the Jeantaud or Panhard type according to the Ackermann principle, as will clearly emerge during the course of the following description. The quadricycle as obtained herein can also be de-assembled to newly obtain the two original conventional bicycles.

With reference to the accompanying figures of the drawings, the proposed quadricycle has been denoted by 100 and comprises: a first bicycle 1; a second bicycle 2; a first member 81 fixed to the first bicycle 1; a second member 82 fixed to the second bicycle 2; means 57, 58, 59, 60 for removably rigidly connecting the first bicycle 1 to the second bicycle 2, such that the first and second bicycles 1, 2 are parallel and arranged side-by-side; a removable third member 32, for example a horizontal connecting bar, hinged (by spherical joints) at an end thereof to the first member 81 and at another end thereof to the second member 82; a first foldable seat 71 and a second foldable seat 72; and a structure 190 predisposed in the rear part of the quadricycle 100 as herein defined and removably fixed to the frames 191, 192 of the respective bicycles 1, 2, which structure 190 bears the foldable seats 71, 72 and is designed and conformed to enable transport of objects and/or of persons, as will be described in more detail herein below.

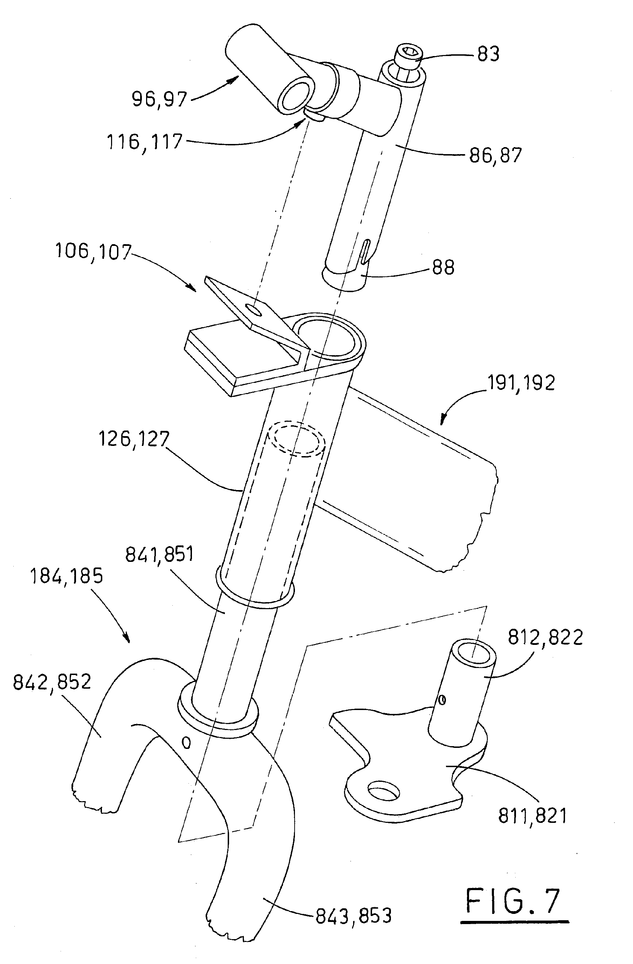

The first member 81 is a single body constituted by a first plate 811 and a sleeve 812, which single body develops in a perpendicular direction starting from the base of the first plate 811; the sleeve 812 is destined to be inserted in the lower part of the tube 841 of the fork 184 of the first bicycle 1 as well as being fixed to the fork 184 by threaded organs (not shown in the figures); according to the illustrated example, the first assembled plate 811 is thus oriented horizontally and underlies the joining region of the ribs 842, 843 of the fork 184 with the relative tube 841 (see figure 7).

In an entirely similar way, the second member 82 is a single body constituted by a second plate 821 and a sleeve 822, which develops in a perpendicular direction starting from the base of the second plate 821; the sleeve 822 is destined to be inserted in the lower part of the tube 851 of the fork 185 of the second bicycle 2 as well as being fixed to the fork 185 itself by threaded organs (not illustrated in the figures); according to the illustrated example, the second assembled plate 811 is thus oriented in a horizontal direction and underlies the joining region of the ribs 852, 853 of the fork 185 with the relative tube 851.

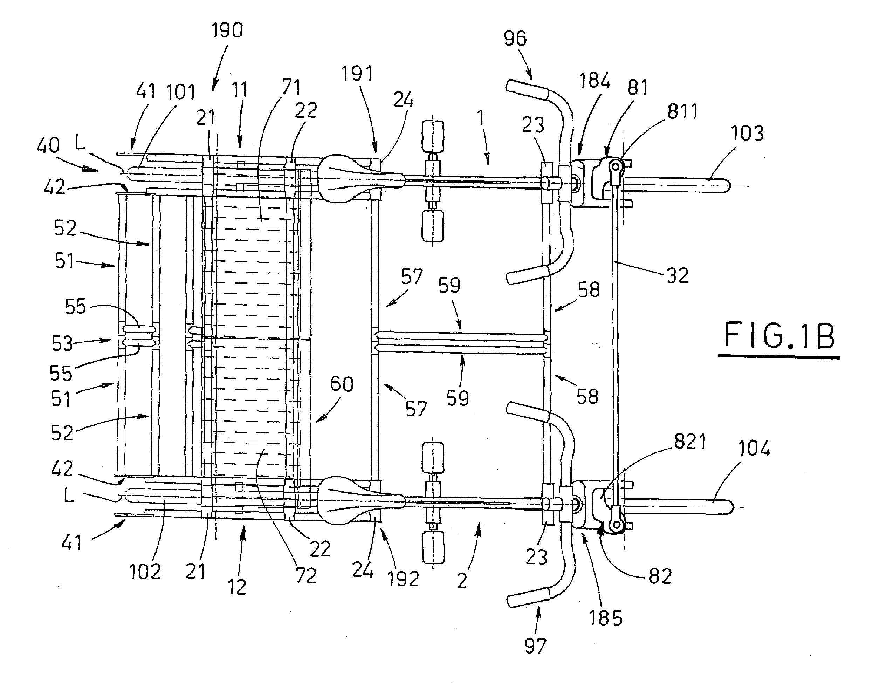

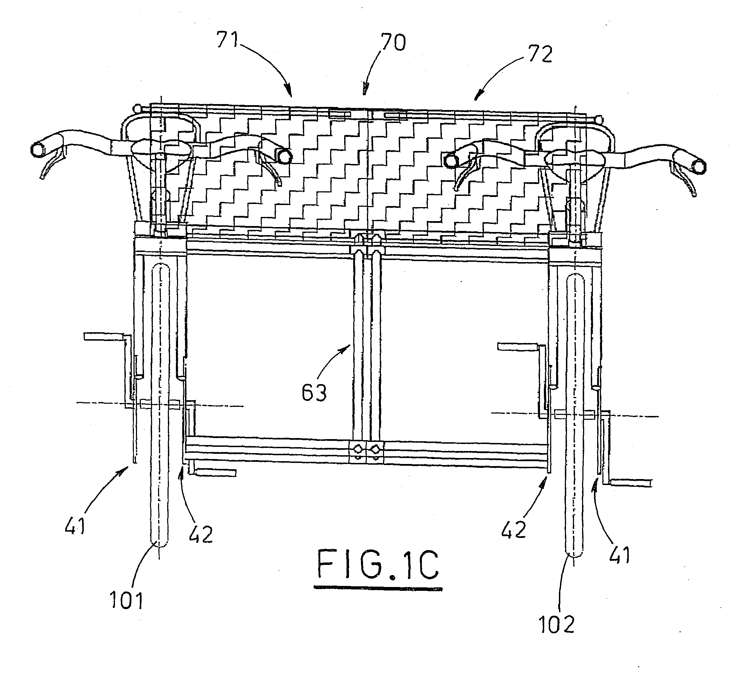

The horizontal connecting bar 32 is hinged (as mentioned, by spherical joints) to the first plate 811 and the second plate 821, see figure 1B.

In the illustrated example, the means for rigidly and removably connecting the first bicycle 1 with the second bicycle 2 comprise pairs of tubular connecting bars 57, 58 constrained to one another by stiffening bars 59 and fixed in a known way at ends thereof respectively at bushes 23, 24 welded to the frames 191, 192 of the bicycles 1, 2.

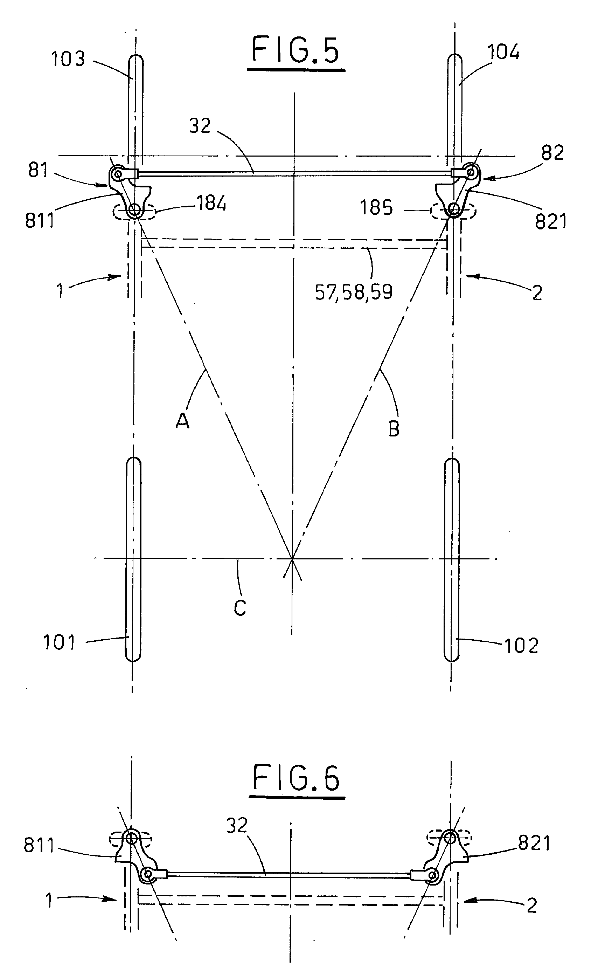

Figure 5 is a schematic plan view of the steering system of the assemblable quadricycle 100 of the invention, which steering system comprises: a first assembly comprising the fork 184 of the first bicycle 1 and the first member 81; a second assembly comprising the fork 185 of the second bicycle 2 and the second member 82; the means for connecting 57, 58, 59 represented equivalently by a single bar; the horizontal connecting bar 32; and at least a steering column 86, 87 which can be chosen from between the steering column 86 of the first bicycle 1 and the steering column 87 of the second bicycle, as will be more fully described herein below.

The steering system is designed such that a first vertical plane A, identified by the rotation axis of the first member 81 with respect to the horizontal connecting bar 32 and the rotation axis of the fork 184 of the first bicycle 1, and a second vertical plane B, identified by the rotation axis of the second member 82 with respect to the horizontal connecting bar 32 and the rotation axis of the fork 185 of the second bicycle 2, intersect one another at or in proximity of the transversal plane C of the quadricycle 100, passing through the common rotation axis of the rear wheels 101, 102 of the first bicycle 1 and the second bicycle 2.

Thus composed, the articulated quadrilateral identified by the steering system is advantageously of the Panhard type (Ackermann principle). In the illustrated example of figure 5, the planes A and B intersect precisely at plane C; in general, those skilled in the art will recognise that in order to minimise dragging friction of the front wheels 103, 104 during the steering of the quadricycle 100, the intersection of the planes A, B can occur only in the vicinity of plane C.

To obtain the articulated quadrilateral of the Jeantaud type (Ackermann principle), as shown in the example illustrated in figure 6 as a variant, it is sufficient to couple the first member 81 and the second member 82 to the corresponding tubes 841, 851 of the fork 184, 185 with the respective first plate 811 and the second plate 821 rotated by 180°, i.e. arranged posteriorly with respect to the forks 184, 185; consequently, also the connecting bar 32 is arranged posteriorly with respect to the forks 184, 185. In this variant all the technical-functional characteristics of the main embodiment, described and reported in the following figures of the drawings, will remain unchanged.

A steering column 86, 87 is an integral part of the steering system if it is rigidly coupled to the fork 184, 185 of the corresponding bicycle 1, 2; in this case, the steering column 86, 87 of the bicycle 1, 2 also represents, in a functional sense, the steering of the quadricycle 100. Thus, both steering columns 86, 87 of the bicycles 1, 2, can alternatively or contemporaneously represent respectively the steering column or columns of the quadricycle 100 of the invention.

A description will follow of: the prior art for removably coupling the steering column 86, 87 of a bicycle 1, 2 with the fork 184, 185; and the additional components 106, 107, 116, 117 of the invention for constraining the group comprising the handlebar 96, 97 and the steering column 86, 87 of the bicycle 1, 2 to the corresponding front tube 126, 127 of the frame 191, 192 once the relative steering column 86, 87 has been uncoupled from the fork 184, 185. In this way, the handlebar 96, 97 thus constrained to the frame 191, 192 of the bicycle 1, 2 (thus the frame of the quadricycle 100) constitutes only a rest element for the cyclist.

As is known, a bicycle 1, 2 of conventional type exhibits a steering column 86, 87 partially inserted in the tube 841, 851 of the relative fork 184, 185 and removably blocked thereto (figure 7); this type of constraint is achieved in a known way by means of a fastening screw 83 which engages the threaded seating of the steering column 86, 87 and an annexed blocking element 88, for example of truncoconical shape. The tightening of the screw 83 causes the abutment of the blocking element 88 against the internal walls of the steering column 86. 87, which consequently intercepts the internal walls of the tube 841, 851 of the fork 184, 185; this determines a rigid coupling of the steering column 86, 87 with the fork 184, 185. Loosening the screw 83 causes the disengagement of the steering column 86, 87 from the fork 184, 185; it follows that the group comprising the steering column 86,87 and the handlebar 96, 97, though partially inserted in the tube 841, 851 of the fork 184, 184 can rotate independently thereof and be height-adjusted according to the user's preferences.

In the present invention, a clamp 106, 107 is fixed to the top of the front tube 126, 127 of each bicycle 1, 2, while a collar 116, 117 is fixed to the handlebar 96, 97 of each bicycle 1,2; the collar 116, 117 affords a threaded seating (not shown in the figures) to enable the collar 116, 117 (and therefore the group comprising the steering column 86, 87 and the handlebar 96, 97) to rigidly removably couple with the corresponding clamp 106, 107.

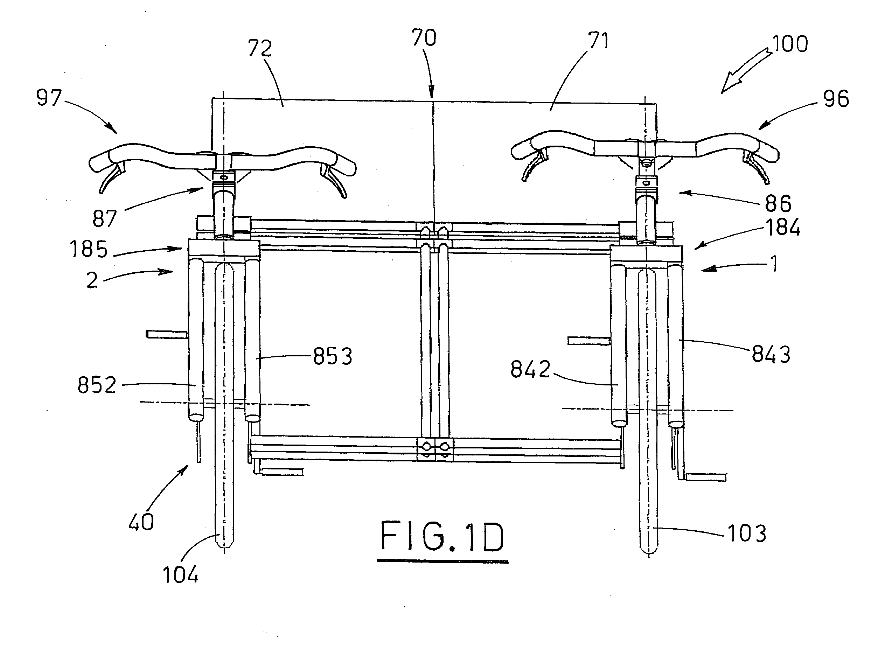

Figure 1D illustrates an example configuration of the quadricycle 100, in which: the steering column 86 of the first bicycle 1 is an integral part of the steering system of the quadricycle 100, and thus is rigidly coupled to the fork 184 and is at the same time not constrained to the clamp 106; the steering column 87 of the second bicycle 2 is not an integral part of the steering system of the quadricycle 100, and is thus free of the fork 185, and is at the same time rigidly coupled to the clamp 107.

The procedure the user must follow to modify the configuration of the quadricycle 100 is simple and rapid and will now be described in a hypothetical case in which the user wishes to "select" the steering column 87 and "deselect" the steering column 86.

The procedure for deselecting the steering column 86 of the first bicycle 1 includes: loosening the fastening screw 83, so that the steering column 86 is free to rotate and slide with respect to the tube 841 of the fork 184 that it is inserted in; lower the handlebar 96-steering column 86 assembly until the collar 116 meets the relative clamp 106 (the point of minimum height of the handlebar 96); and finally fasten the clamp 106 by means of threaded organs to the collar 116, determining a rigid coupling of the handlebar 96-steering column 86 assembly with the frame of the quadricycle 100.

The procedure for selecting the steering column 87 of the second bicycle 2 comprises: disengaging the clamp 107 from the collar 117; bringing the handlebar 97-steering column 87 assembly to the desired height; and finally tightening the screw 83 such that the steering column 87 is rigidly coupled to the fork 185.

It is stressed that, alternatively, starting from the configuration of the quadricycle 100 of figure 1D, the user could have simply selected the steering column 87 from the second bicycle 2; in this case both the cyclists can guide the quadricycle 100, as both steering columns 86, 87 are part of the guiding system.

Each bicycle 1, 2 is posteriorly provided with a luggage rack 11, 12 to which a first bush 21 and a second bush 22 are welded.

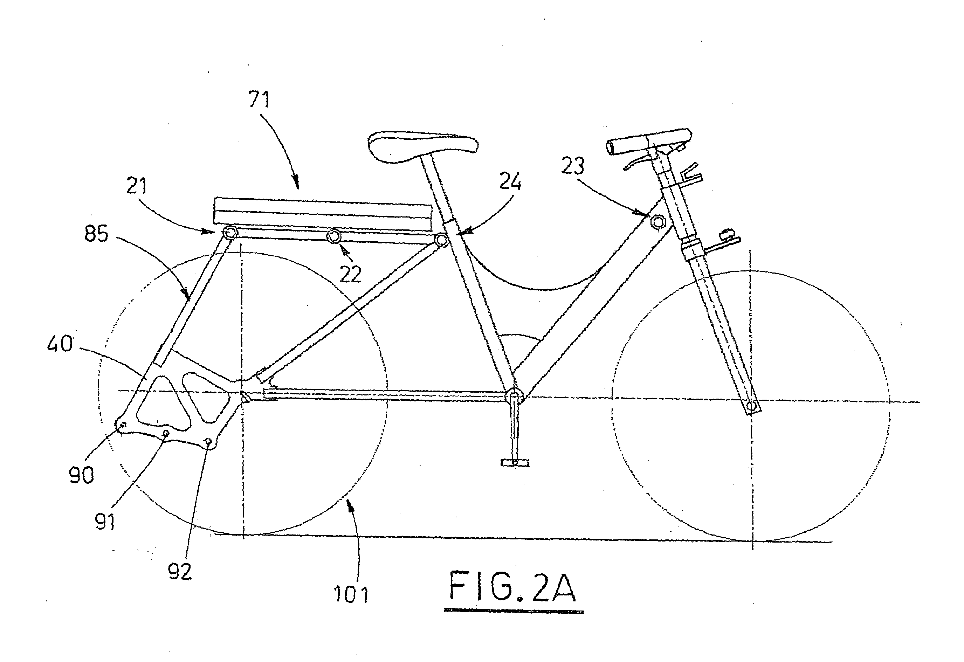

The portion of the frame 191, 192 of each bicycle 1, 2 which bears the hub of the rear wheel 101, 102 is conformed by two facing small frames 40, respectively an external frame 41 and an internal frame 42, which are symmetrically arranged with respect to the longitudinal axis L of each bicycle 1, 2. Each frame 41, 42 extends, with respect to the hub of the rear wheel 101, 102, on an opposite side with respect to the portion of frame which bears the pedal cranks (figure 2A). The lower portion of each small frame 41, 42 affords three through-holes 90, 91, 92.

Four tubular reinforcement elements 85 conjoin the rear end of the luggage racks 11, 12 of the first and second bicycles 1, 2, at the bush 21, respectively to the small frames 41, 42.

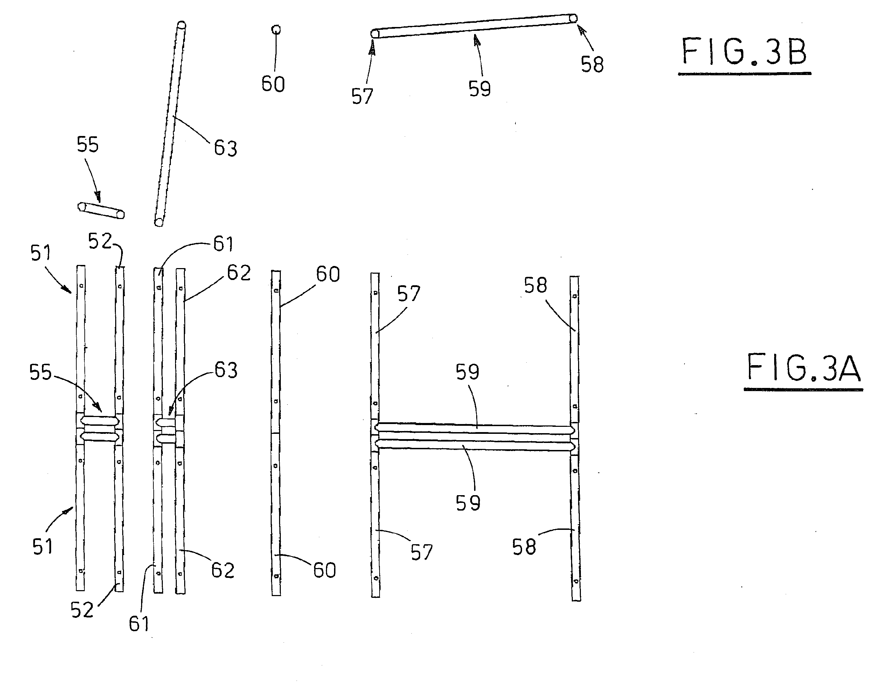

With reference to figures 3A, 3B, the structure 190 comprises: pairs of tubular connecting bars 51, 52, constrained to one another by stiffening bars 55 and fixed at ends thereof respectively in holes 90, 91 in the internal small frames 42 by means of known-type fastening organs; pairs of tubular connecting bars 61, 62 constrained to one another by stiffening bars 63 and fixed at ends thereof respectively in the holes 92 of the internal small frames 42 and the bushes 21 by means of known fastening organs; and a tubular connecting bar 60 fixed at ends thereof in the bushes 22 by means of known-type fastening organs.

In addition, the structure 190 further comprises bars (not illustrated) for supporting the backrests of the seats 71, 72 when the quadricycle 100 is assembled and for laterally containing the passengers, which bars are removably fixed in a known way to the frames 191, 192 of the bicycles 1, 2.

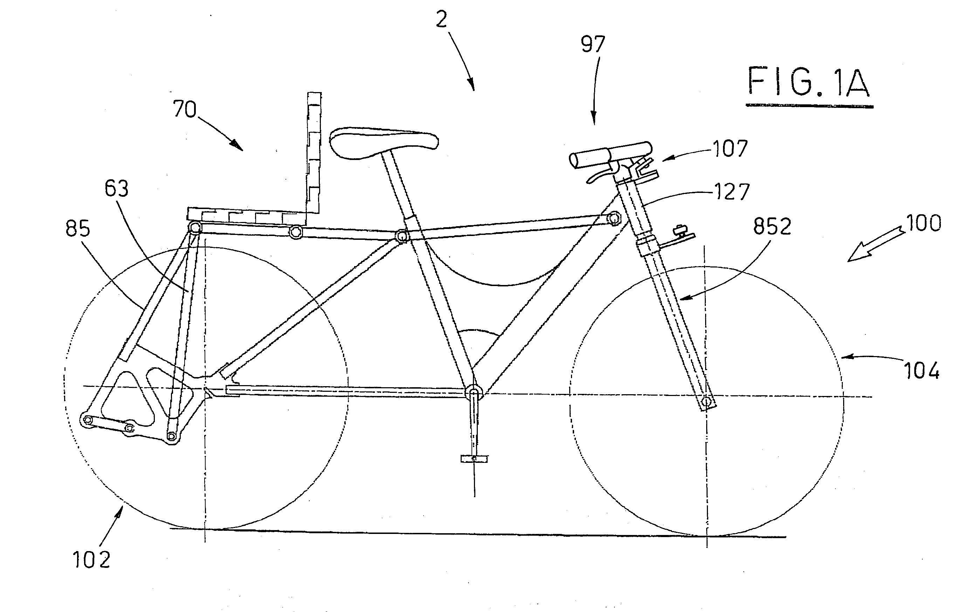

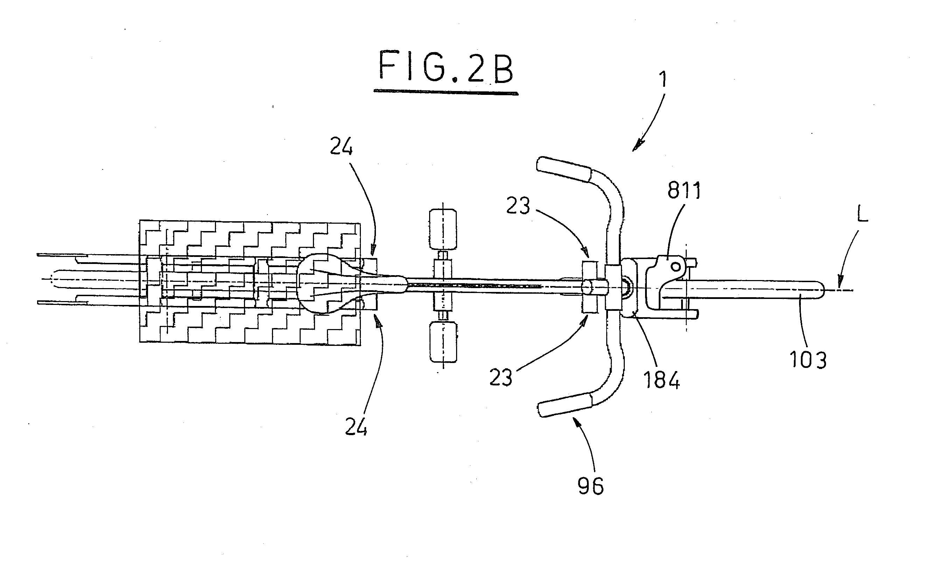

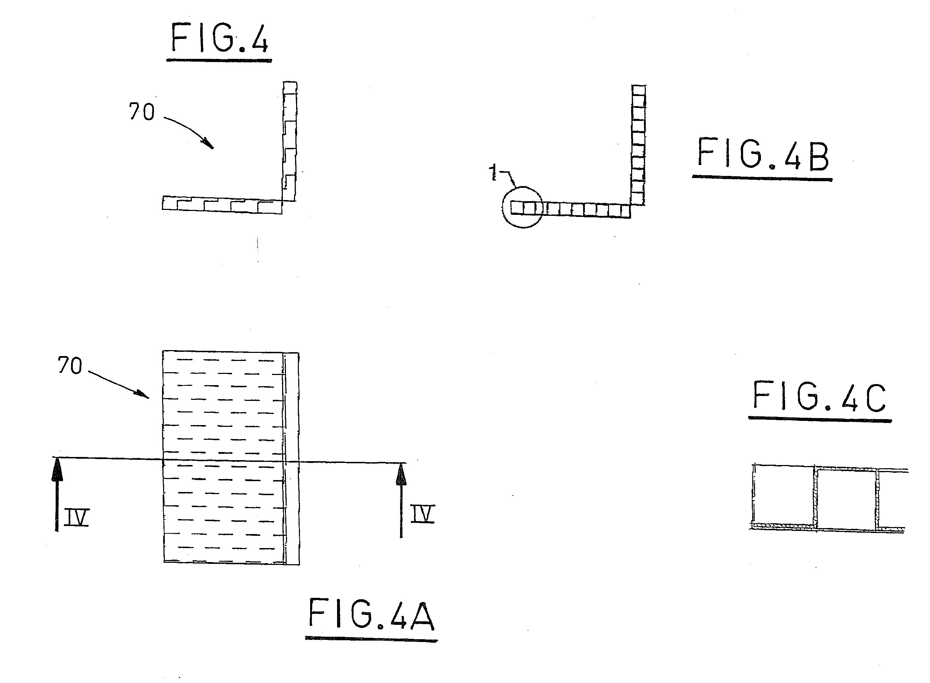

The foldable seats 71, 72 are respectively removably fixed to the upper portion of the luggage racks 11, 12 of each bicycle 1, 2 by known screw means (not illustrated). The bench and backrest of each seat 71, 72 are preferably rectangular and of same sizes. Each seat 71, 72 can take on a closed configuration, used when the two bicycles 1, 2 are separate from one another and in which the backrest is in contact with the bench (figures 2A, 2B); and an open configuration adopted when the two bicycles 1, 2 are coupled, in which the bench and the backrest of the seat are arranged at about between 90° and 100° to one another (figures 1A, 4, 4A).

More precisely, the foldable seat 71, 72, when in the closed configuration, has a rectangular shape and the screw means mentioned above enable fastening the lower portion of the seat to the luggage rack 11, 12 so that the seat 71, 72 is arranged longitudinally on the luggage rack 11, 12 itself (figures 2A, 2B).

When the bicycles are joined together to form the quadricycle 100, the seats 71, 72 are in the open configuration and are arranged transversally to the advancement direction of the quadricycle (figures 1A, 1B).

As can be seen in figures 4B, 4C, the bench and backrest of the seat 71, 72 exhibit a box structure and receive respective sheet elements, folded to define a plurality of longitudinal seats. The seats are advantageously of such a size to receive, when the bicycles 1, 2 are used separately from one another, the tubular connecting bars 57, 58, 60, 61, 62, 51, 52, the stiffening bars 59, 63, 55 as well as the bars for supporting the backrests of the seats 71, 72. This is extremely advantageous as it enables the cyclists, when the bicycles 1, 2 are separate, to transport all the mechanical components needed for the assembly of the quadricycle easily and with a minimum possible overall size.

It is stressed that the quadricycle 100 of the invention is preferably realised using extremely light materials, and can advantageously be provided with a gear-change mechanism.

A canopy hood can be provided to shield the passengers and/or the driver/s from atmospheric agents.

An electric motor, for example mechanically connected to the rear wheels of the quadricycle 100, can be provided to make the advancing of the quadricycle 100 easier.

The advantage of the present invention consists in having defined a new-concept pedal-powered quadricycle which can be made up starting from two bicycles and can be easily de-assembled in order newly to obtain the separate bicycles, rapidly and with the use of a limited number of additional mechanical components; this is advantageously obtained by including a steering system which satisfies the Ackermann principle with a Panhard (the main embodiment) or Jeantaud (a variant illustrated in figure 6) articulated quadrilateral, and thus minimises the dragging friction of the front wheels of the quadricycle.

A further advantage of the present invention consists in having defined an assemblable pedal-powered quadricycle which is easy to guide, enables precise direction changes and the costs of which are relatively contained with respect to the advantages offered.

A still further advantage of the present invention consists in having defined an assemblable pedal-powered quadricycle which enables easy transport of objects and/or persons and the additional mechanical components of which can be stored in the internal seating of the foldable seats and therefore be transported easily and with a small overall mass when the bicycles are separate.

The invention has obviously been described, with reference to the appended figures of the drawings, purely by way of non-limiting example, and it is therefore clear that modifications and variants can be brought thereto, without its forsaking the ambit of protection of the following claims.

## Claims

1. An assemblable pedal-powered quadricycle, **characterised in that** it comprises: a first bicycle (1); a second bicycle (2); a first member (81) fixed to the first bicycle (1); a second member (82) fixed to the second bicycle (2); means (57, 58, 59) for rigidly removably connecting the first bicycle (1) and the second bicycle (2) to one another, in such a way that the first bicycle (1) and the second bicycle (2) are parallel to one another and side-by-side; a removable third connecting member (32) constrained at an end thereof to the first member (81) and at another end thereof to the second member (82), a steering system of the quadricycle (100) comprising: a first assembly including a fork (184) of the first bicycle (1) and the first member (81); a second assembly including a fork (185) of the second bicycle (2) and the second member (82); the means for connecting (57, 58, 59); the third connecting member (32); and at least a steering column (86, 87) selected from between the steering column (86) of the first bicycle (1) and the steering column (87) of the second bicycle (2).

2. The quadricycle of claim 1, **characterised in that**, in particular, the removable third connecting member (32) is constrained to the first member (81) and the second member (82) by means of respective spherical joints.

3. The quadricycle of claim 1, **characterised in that,** in particular, the first member (81) is fixed to the corresponding fork (184) of the first bicycle (1), and the second member (82) is fixed to the corresponding fork (185) of the second bicycle (2) such that: a first plane (A) identified by a rotation axis of the first member (81) with respect to the third connecting member (32) and by a rotation axis of the fork (184) of the first bicycle (1), and a second plane (B) identified by a rotation axis of the second member (82) with respect to the third connecting member (32) and by a rotation axis of the fork (185) of the second bicycle (2), intersect one another at or in proximity of a transversal plane (C) of the quadricycle (100) passing through a common rotation axis of rear wheels (101, 102) of the first bicycle (1) and the second bicycle (2).

4. The quadricycle of claim 1 or 2 or 3, **characterised in that** the first member (81) and the second member (82) are specially-conformed plates (811, 821).

5. The quadricycle of claim 1, or 2, or 3, or 4, **characterised in that** the third connecting member (32) is a horizontal bar hinged at ends thereof respectively to the first member (81) and the second member (82).

6. The quadricycle of claim 1, **characterised in that** the means for rigidly connecting (57, 58, 59) and the third connecting member (32) are removable for enabling a de-assembly of the quadricycle (100) in order newly to obtain the first bicycle (1) and the second bicycle (2) by separation thereof from one another.

7. The quadricycle of claim 1, **characterised in that** it comprises means for removably blocking at least a steering column (86, 87), which is one of the steering column (86) of the first bicycle (1) and the steering column (87) of the second bicycle (2), to a relative frame (191, 192) of the corresponding first bicycle (1) or the second bicycle (2).

8. The quadricycle of claim 7, **characterised in that** the means for removably blocking comprise: a clamp (106, 107) constrained to a front portion (126, 127) of the frame (191, 192) of the corresponding first bicycle (1) or the second bicycle (2); and fastening organs of the clamp (106, 107) to the assembly of the steering column (86, 87) and the handlebar (96, 97) of the corresponding first bicycle (1) or second bicycle (2).

9. The quadricycle of claim 1, **characterised in that** it comprises means for resting (70), removably fixed to a rear portion of each of the first bicycle (1) and second bicycle (2) for transporting at least a passenger and/or objects.

10. The quadricycle of claim 9, **characterised in that** the means for resting (70) comprise a first foldable seat (71) and a second foldable seat (72), respectively associated to the first bicycle (1) and the second bicycle (2), each of which first and second foldable seats (71, 72) can assume a closed configuration, in which a backrest of the relative first and second foldable seats (71, 72) is in contact with a relative bench of the first and second foldable seats (71, 72) when the first and the second bicycles (1, 2) are separate; and an open configuration, in which the bench and the backrest are arranged substantially perpendicularly to one another when the first and second bicycles (1, 2) are coupled to one another.

11. The quadricycle of claim 10, **characterised in that** each of the first and the second foldable seats (71, 72), when in the closed configuration thereof, is fixed to a luggage rack (11, 12) of the relative first and second bicycle (1, 2) and is arranged longitudinally to an advancement direction of the relative first and second bicycle (1, 2).

12. The quadricycle of claim 10, **characterised in that** each of the first and second foldable seats (71, 72), when in the open configuration thereof, is fixed to the luggage rack (11, 12) of the relative first bicycle (1) and second bicycle (2), and is arranged transversally to an advancement direction of the quadricycle (100).
